(19) Europäisches Patentamt
European Patent Office
Office européen des brevets

(11) Publication number: **0 162 802**
**A2**

(12) # EUROPEAN PATENT APPLICATION

(21) Application number: 85730068.5

(22) Date of filing: 09.05.85

(51) Int. Cl.⁴: C 10 G 1/10
C 10 G 1/02, C 10 B 53/00

(30) Priority: 21.05.84 US 612382

(43) Date of publication of application:
27.11.85 Bulletin 85/48

(84) Designated Contracting States:
DE FR GB SE

(71) Applicant: Pyrolytic Technologies, Inc.

Uniontown Ohio 44685(US)

(72) Inventor: Grispin, Charles W., Jr.
2895 Albrecht Ave.
Akron Ohio 44312(US)

(74) Representative: Meissner, Peter E., Dipl.-Ing. et al,
Meissner & Meissner Patentanwälte Herbertstrasse 22
D-1000 Berlin 33 Grunewald(DE)

(54) **Pyrolytic process and apparatus.**

(57) A pyrolysis process and reactor converts various hydrocarbons such as waste materials, for example, scrap polymers, tires, etc., into various chemical components or amounts thereof, not otherwise produced by conventional pyrolytic processes. A large reactor size is utilized in association with a low heat input per unit weight of charge. A thick pyrolyzate/"char" layer is formed during pyrolysis. The product or various components thereof can be utilized as a fuel or octane additive.

EP 0 162 802 A2

Croydon Printing Company Ltd

## TECHNICAL FIELD

The present invention relates to a pyrolytic process. More specifically, the present invention relates to a process for producing novel components or components in clearly unexpected amounts than conventional processes heretofore utilized.

## BACKGROUND ART

Heretofore, pyrolytic reactors have generally utilized small amounts of materials at very high heat input rates. The material was typically thinly spread over the heating surface.

Moreover, applicant is not aware of any prior art patents which teach or suggest applicant's process as well as the results obtained therefrom. For example, U. S. Patent No. 3,714,038 to Marsh relates to a pyrolysis process wherein a mixture of organic and inorganic wastes are pulped in a liquid such as water to form a slurry, dewatered, and then pyrolyzed or hydrogenated. As such, it lacks any suggestion of applicant's reactor size, slow heat input, a deep char bed, and the like.

U. S. Patent No. 3,809,680 relates to a hard resin prepared by the reaction of formaldehyde and pyrolyzed oil obtained by the destructive distillation of scrap rubber vulcanizate. However, this patent does not teach or suggest applicant's percentage of end products, type of end products, and the like.

Whittaker, U. S. Patent No. 3,822,218 relates to the addition of a carbonaceous binder to a rubber prior to the destructive distillation thereof.

Liska, U. S. Patent No. 3,823,223 relates to a destructive distillation of synthetic rubber scrap to produce a char which, when ground, can be used in reinforcement of rubbers.

U. S. Patent No. 4,123,332 to Rotter also relates to a process and apparatus for treating carbonizable materials such as tires. Various end products are produced.

U. S. Patent No. 3,085,038 relates to a process for recovering cellulose from vegetable materials via hydrolysis.

Urban, U. S. Patent No. 3,864,097 and 3,864,096, relates to a process for converting cellulose into an oil with a catalyst and at temperatures of between 200$^{\circ}$ to 375$^{\circ}$C.

Jackman, U. S. Patent No. 3,910,775, discloses an apparatus and method for converting refuse, sewage, and industrial wastes into fuel substances. The waste material is converted to briquettes which can be burned as a fuel.

Martinez, U. S. Patent No. 3,923,472, relates to a process for converting thermoplastic synthetic fibers into an oil suitable for use as a fuel. The fibers are first saturated in an oil-bearing liquid and then heated to a temperature which changes the mixture into a liquid state.

Powell, U. S. Patent No. 3,926,582 relates to the pyrolytic treatment of solid waste materials including a heterogeneous mixture of organic and inorganic wastes of all known types. The process, however, is conducted in an oxygen-rich gas.

Penque, U. S. Patent No. 3,933,577, employs the step of sonically pulping municipal waste in the presence of water and certain alkaline compounds.

Tsukagoshi, U. S. Patent No. 3,947,256, relates to applying simultaneous compression and shearing action on polymers until they are in a state of fusion and decomposed at least in part to a fluid state. The fluid can be equalized as a fuel.

Brenneman, U. S. Patent No. 3,961,913, discloses a process for treating organic waste materials with acids at elevated temperatures to form a solid fuel material.

Larsen, U. S. Patent No. 3,996,022 relates to a process for converting waste solid rubber scrap into useful liquid, solid and gaseous products. The process is conducted in the process of certain salts at temperatures of between 300° and 500°C.

Beningson, U. S. Patent No. 4,063,903, relates to an apparatus for disposal of solid wastes by converting them to a fuel and some amount of sterile land fill materials. Various steps are applied such as shredding, magnetic separating, separating finds, applying acids, heating and drying.

U. S. Patent No. 4,095,956 to Holmes relates to a system for processing municipal wastes, wherein the waste is separated into a combustible fraction which is bailed and can subsequently be burned.

Espenscheid, U. S. Patent No. 4,145,188, solubilizes municipal refuse and other solid organic wastes in a highly automatic refined petroleum solvent to produce a homogeneous heavy oil or bitumen composition.

U. S. Patent No. 4,164,396 to Jones relates to producing a fuel from waste refuse material by combining solid fibrous materials with liquid combustible materials.

Taylor, U. S. Patent No. 4,325,329, relates to producing alcohol and mixing it with gasoline on board a vehicle.

U. S. Patent 4,028,068 to Kiener relates to a process and apparatus for the production of combustible gas.

A brochure by Kutries relates to a pyrolytic process but lacks a suggestion of a temperature gradient across a pyrolyzate/char layer.

Finally, U. S. Patent No. 4,344,770 to Capener relates to a method and apparatus for converting solid organic materials such as garbage, sewage sludge, and cellulosic products into a fuel oil and gas. Pyrolysis of the waste material is reported to produce certain oil fractions which can be used as fuels as in the firing of a boiler.

However, none of these patents suggest applicant's process of utilizing a large volume reactor, a fairly sufficient amount of hydrocarbon materials such as various polymers, the formation of a temperature gradient across a pyrolyzate/char layer, the slow heating of said hydrocarbon aceous material, the use of moderate conditions although products suggest that severe conditions have been utilized, and the like. Furthermore, these references fail to teach or suggest and, in fact, teach away from the end products obtained by applicant's process.

## DISCLOSURE OF INVENTION

It is therefore an aspect of the present invention to provide a process for pyrolyzing hydrocarbon aceous materials.

It is also an aspect of the present invention to provide a process for pyrolyzing hydrocarbon aceous materials, as above, wherein said materials are polymers.

It is yet another aspect of the present invention to provide a process for pyrolyzing hydrocarbonaceous materials, as above, wherein said pyrolytic process utilizes a low heating rate.

It is yet another aspect of the present invention to provide a process for pyrolyzing hydrocarbonaceous materials, as above, wherein a sufficient amount of material is utilized such that a pyrolyzate/char bed is formed having a temperature gradient thereacross.

It is yet another aspect of the present invention to provide a process for pyrolyzing hydrocarbonaceous materials, as above, wherein decidedly different products are produced from a feed stock than from the utilization of conventional pyrolytic methods.

These and other aspects of the present invention will become apparent from the subsequent description.

In general a pyrolysis process for hydrocarbon material, comprising the steps of:

obtaining a pyrolytic reactor having an internal volume of at least 1 cubic feet;

charging an amount of hydrocarbon material thereto such that a pyrolyzate/char layer is formed during heating;

applying heat at a rate of from about 1,000 btu's per pound per hour or less to said hydrocarbon material; and

drawing off and collecting by-products from said reactor.

BEST MODE FOR CARRYING OUT THE INVENTION

Specific characteristics of this invention include large reactor sizes, large amounts of charged hydrocarbonaceous materials, low heat input rates, a formation of a pyrolyzate/char material on the reactor heating surface having a temperature gradient across said pyrolyzate/char material, and the like. The hydrocarbon material can be that utilized by conventional pyrolytic processes but desirably are polymers such as polyethylene, polypropylene, polyester, acrylonitrile-butadiene-styrene copolymers, polyamide, polyurethane, polyethers, polymer alloys, block copolymers , and the like. Generally, polymers in the form of scrap material, for example scrap polystyrene, ABS, tires, polyethylene, polypropylene, scrap paint, scrap adhesive, scrap resin, and the like, are ideally suited for use as a charge material in association with the present invention. A preferred charge material is scrap tires. That is, the source of the charge material has a large amount of polybutadiene, styrene-butadiene copolymer, polyisoprene, either natural or synthetic, and the like. Polymers yielding halogenated material upon pyrolysis can be tolerated but, due to their corrosive effect, are not desired, such polymers include polyvinyl chloride, polytetrafluoroethylene, and other halogenated polymers. Other hydrocarbons which can be

utilized include coal, shale oil, and carbohydrates. Scrap material such as polystyrene, scrapped tires, and the like, is usually in the form of pellets or small particles since it has been shredded.

The heating temperature applied to the pyrolytic reactor is generally from 800°F to about 2,500°F, desirably from about 1,200°F to about 2,300°F and preferably from about 1,500°F to abot 2,000°F. Due to the high heating temperature, reactor vessels are utilized which have a higher melting point. Typically, steel, stainless steel, or high temperature alloys, e.g. Inconel are utilized. The heat source can be any conventional source yielding a desired temperature and includes natural gas, electric heat, coke, and the like. Moreover, the heating rate can be variable and/or include reheating.

The reactor vessel of the present invention is generally considered important. Whereas most prior art vessels were of a small size, generally below one cubic foot, the reactor vessels of the present invention generally have an inside volume of from about 1 cubic foot to about 10,000 cubic feet, desirably from about 3.0 cubic feet to about 2,000 cubic feet, more desirably from about 8 to about 1,000 cubic feet and preferably from about 8 to about 200 cubic feet. Although larger sizes can be utilized, they are generally impractical because of fabrication costs, engineering considerations and the like. Typically, the pyrolytic reaction is carried out without any mixing. Should some sort of an internal mixer be utilized, the internal volume is usually larger as from about 2 cubic feet to about 2,000 cubic feet and preferably from about 10 to about 500 cubic feet. Naturally, the rate of

agitation and agitation configuration are parameters that would influence optimal size. Should a continuous type reactor be utilized, that is wherein the material is gradually conveyed along a bed or the like, much larger reactors may be utilized. However, in general, the conveyor bed can be broken up into a plurality of units, each treated as a separate entity as it moves along the bed, with each separate unit being within the volume reactor size as set forth above. Although the reactor shape can vary, generally reactors having a high volume to surface area are desired such as cubical, rectangular, and spherical type reactors. Moreover, the reactor should have a sufficient depth to enable the formation of a pyrolyzate/char layer during pyrolysis and sufficient head space thereabove to allow escape of products, e.g. (gases) and provide for processing ease. That is, a large head space gives surge volume and prevents plugging of the system.

The amount of material utilized in the reactor is generally quite high. Generally, based upon a standard comparison basis of approximately 64 cubic feet, that is a cubical vessel having edges of four feet, the weight is from about 100 to about 1000 pounds of said hydrocarbon material, desirably from about 200 to about 750, with a preferred amount being from about 300 to about 500 pounds. Smaller or larger size reactors generally have a proportional amount of material. An agitated system has a higher range as from about 200 to about 3,500 pounds and preferably from about 500 to about 2,000 pounds. Generally the size will vary according to the type of charge material.

The heating rate constitutes an important aspect of the present invention in that it has been found that use of low input heat rates along with the formation of a pyrolyzate/char bed, large amounts of feed stock, and the like, yield products or amounts thereof not heretofore achieved. Typically, a heat input rate of 5,000 btu's or less per pound of material per hour is utilized. More desirably, a heat input of 2,000 btu's or less is utilized with an input of 500 btu's per pound of feed stock per hour being preferred. However, the input is generally greater than 100 btu's per pound per hour.

The formation of a the pyrolzate/char layer or bed, is due to the high heat applied to a surface of a vessel, essentially breaking down the feed material and yielding various pyrolysis products. The pyrolyzate bed depth necessary to a particular pyrolysis reaction will vary according to various parameters such as heat rate, amount of material utilized, type of material utilized, pressure, agitation, and the like. However, a requirement of the present invention is that the heating rate and mass of material utilized is such that a pyrolyzate/char bed or layer is formed having a temperature gradient thereacross. That is, the formation of a pyrolyzate/char bed temperature gradient is a dynamic condition depending upon various parameters as noted above. Generally, the thickness of the char layer is a few inches, although it may be several.

The reaction is generally carried out at atmospheric pressure or at low pressure for example from about 0.8 to about 80 psig, with from about 0 to about 15 psig preferred due to internal generated pressure.

As in accordance with general pyrolysis equipment, the present invention utilizes necessary and conventional support equipment. For example, a gas take-off stream that has a condensor, for example, thereon. Other appropriate equipment include various liquid streams, heat exchangers, instrumentation, catalytic reformers, stripping and distillation columns, and the like. Although not fully understood, it is thought that the following occurs in the reaction vessel. Once the material, for example, waste or scrap polymer has been added to the large vessel in a large amount, the slow heating rate is applied. Due to the high heating temperature, the material adjacent to the heating surface generally decomposes first and breaks down into various components, often in the form of gas and liquid. As pyrolysis of this fraction or layer continues, a char layer is formed. The char helps catalyze unusual reactions and maintains a temperature gradient, yet it impedes heat flow. Due to the heat, a generally fluid mass is formed above the char layer which tends to be in somewhat constant churning motion via convection and/or conduction, or the like. The pyrolyzate/char layer is generally formed of a sufficient thickness such that a temperature gradient thereacross exists. That is, a significant drop in temperature as from about 300°F to about 1,500°F exists across the char layer from the surface contacting the heating surface to the upper boundary of the char layer.

Different rates of pyrolysis and/or types of products therefrom within the pyrolyzed vessel can occur. The temperature on the reaction vessel is of one degree whereas the bottom pyrolyzate/char layer is of a different temperature, which in turn

is different from the top pyrolyzate/char layer, which in turn is different from the pyrolyzate liquid, which may in turn be different from the exiting gases or types of products therefrom. For a given steady heating rate, the rate of pyrolysis is usually not constant. Above the initial activation temperature for a given system, various plateaus of product rate and product temperature have been observed. From a thermodynamic standpoint, a temporary or pseudo-equilibrium is maintained during the plateau until products being expelled are exhausted and a new level reached. Next, another temperature level will be naturally sought at which time a different degradation reaction occurs evolving yet other pyrolytic components. The pyrolysis reactions thus continue until essentially all of the material has been pyrolyzed, leaving the char layer. Moreover, depending on the nature of the feed stock, the char layer in the reaction vessel is generally of a porous nature.

Should the reactor be of a continuous type, the formation of the char layer and evolution of various factors tend to take place as a unit along a specific horizontal length as the bed moves from the feeding station to the end dumping station. Thus, the unit thereof can essentially be treated as a self-contained batch process.

Generally, the present invention tends to produces higher amounts of unsaturated organic compounds as well as higher amounts of aromatic type compounds as compared to conventional pyrolytic processes. Additionally, novel or unusual compounds are often obtained.

Depending upon the type of initial feed stock utilized, the end products can be utilized for common and conventional applications. However, should a feed stock generally be of a conventional rubber type, or even a mixture of polyisoprene and polystyrene, a large portion of the end products find considerable use as octane additives for gasoline, due to high amount of 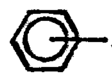 Alkyl compounds or for use with various fuels such as boiler fuels, utilization with coal, and the like.

The present invention will be better understood by reference to the following examples.

EXAMPLE 1

A 50/50 blend by weight of polyisoprene, containing 96 weight percent plus of synthetic cis-1,4-polyisoprene, and polystyrene was added to a reactor.

Reactor 1 was a 24 inch by a 2 inch diameter pipe of 304 stainless steel which was capped at the ends. The reactor was heated with a propane burner having a flame temperature of approximately 1,800$^{o}$F with a burner size of approximately 24 inches long and 2 inches in width. The reactor contained one pound of the blend and was heated at the rate of 41,000 btu's per pound per hour. The heating time with regard to exhaustive pyrolysis was approximately 30 minutes.

Reactor 2 was a 36 inch by 4 inch diameter pipe containing two 150 pound flanges on the ends thereof. The burner which was utilized was the same as in Reactor 1. The reactor contained 10 pounds of the blend and was heated at the rate of 4,100 btu's per pound per hour and was heated until exhaustive pyrolysis occurred at about 1 hour and 55 minutes.

Reactor 3 was the same as reactor 4 set forth herein below and was also heated with propane at a temperature of approximately 1,800$^{o}$F. The size of the burner was about 400,000 btu/hours. 100 pounds of the blend was added to the material and also heated at a rate of 4,100 btu's per pound per hour for a period of approximately 2 hours.

Reactor 4 was a 400 gallon reactor having spherical heads with a 4 foot diameter and 3/8 inch thickness. The shell of the stainless steel reactor was 1/4 inch by 4 foot in length by 4 foot in diameter. This reactor was heated with propane heat source of about 400,000 btu/hours. 1,000 pounds of the blend was added to the reactor and heated at a rate of 4,000 btu's per pound for approximately 6 hours and 10 minutes.

Standard conventional equipment such as a heat exchanger (condensor), surge tank and pressure regulator for escaping gas, were attached to the reactors to extract and collect the products. The pressures during the reactions were low generally of the range of 0 to 5 psig.

Table I sets forth the products yielded by each of the different size reactors. Reactor 1 had a heating input of approximatey 41,000 btu's per pound of material added, whereas Reactors 2 and 3 had a heating input of approximately 4,100 btu's per pound per hour, whereas Reactor 4 had a heating input of approximately 400 btu's per pound per hour. Reactors 1, 2 and 3 relate to controls and show that heating rates as well as amounts of materials and reactor size are generally outside that of the present invention and yielded no significant change or variation of the amounts or types of the end product. However, Reactor 4, which is in accordance

with the present invention, achieves significant and unexpectant outputs of particular components. For example, the amount of toluene shows a significant increase from applicant's process to that of the prior art. More dramatic is the amount of ethyl benzene produced which increases from typically 3 percent to almost 18 percent. Ethyl benzene has an octane reading of approximately 120 and thus can be utilized as an octane additive in gasoline. The amount of (1-methylethyl) benzene also shows a dramatic improvement. However, the styrene produced is generally undesirable in that, due to the impurities present, it cannot be easily purified for use as a monomer and is drastically reduced as from about 54 or 60 percent to 33 percent. Additionally, the amount of limonene went from 21.5 percent to about 11 or 14 percent by weight. It was also unexpected that significant amounts of (1-methylethenyl)cyclopropane, 1-methyl-1,3-cyclopentadiene, 1,5-dimethylcyclopentene, 2-methyl-1,3-pentadiene, 1,2-dimethylcyclohexane, and 3,7,7-trimethylbicyclo-[4.1.0.]-heat-2-ene were produced. It is also evident that 3-methyl-1,3,5-hexatriene was present in all samples, an apparent aromatic precursor. As a whole, large reductions or increases occur in the obtainment of various compounds not heretofore produced by any pyrolysis methods. Additionally, the amount of aromatics is drastically changed in that the Reactor 1 shows a yield of 69.2 percent of aromatics based upon a 50 percent by weight input. However, according to the present invention, a 50 percent aromatic input yields in Reactor 4 an 81.2 percent output. Thus, approximately a 62 percent increase in the amount of aromatics produced was obtained.

TABLE I

| Compound | Reactor: Percent of Total | | | |
|---|---|---|---|---|
| | I | 2 | 3 | 4 |
| 2-butene | 0.2 | 0.1 | 0.5 | 0.5 |
| 3-methyl-1-butene | 0.1 | 0.1 | 0.1 | 0.2 |
| 2-pentene | 0.1 | 0.2 | 0.4 | 0.5 |
| 2-methyl-1,3-butadiene* | 4.4 | 3.2 | 4.2 | 4.4 |
| (1-methylethenyl)cyclopropane | 0.1 | 0.1 | 0.2 | 0.2 |
| 1-methyl-1,3-cyclopentadiene | 0.1 | 0.1 | 0.2 | 0.1 |
| 1,5-dimethylcyclopentene | 0.2 | 0.1 | 0.2 | 0.1 |
| 2-methyl-1,3-pentadiene | 0.2 | 0.2 | 0.5 | 0.4 |
| 3-methyl-1,3,5-hexatriene | 0.2 | 0.2 | 0.3 | 0.2 |
| 3-methyl-2,4-hexadiene | 0.5 | 0.5 | 0.4 | 0.6 |
| 2,4,4-trimethyl-2-pentene | 0.1 | 0.1 | 0.1 | 0.1 |
| Toluene | 4.1 | 5.1 | 5.6 | 7.6 |
| 1,2-dimethylcyclohexane | 0.2 | 0.2 | 0.1 | 0.2 |
| 2,3-dimethyl-1,4-hexadiene | 0.2 | 0.2 | 0.3 | 0.3 |
| $C_8H_{12}$ unsaturated aromatic | 0.1 | 0.1 | 0.1 | 0.1 |

TABLE I(continued)

| Compound | Reactor: Percent of Total | | | |
|---|---|---|---|---|
| | I | 2 | 3 | 4 |
| Ethyl benzene | 3.2 | 6.3 | 3.2 | 18.8 |
| $C_9H_{14}$ unsaturated aromatic | 0.5 | 0.1 | 0.2 | 0.1 |
| (1-methylethyl) benzene | 0.3 | 0.7 | 0.6 | 4.9 |
| $C_{10}H_{16}$ unsaturated aromatic | 0.2 | 0.2 | 0.1 | 0.1 |
| Styrene | 54.6 | 51.0 | 60.2 | 33.2 |
| 1,2-dimethyl benzene | 0.3 | 0.3 | 0.9 | 0.2 |
| $C_{10}H_{16}$ unsaturated aromatic | 0.3 | 0.3 | 0.2 | 0.2 |
| Propyl benzene | 0.4 | 0.6 | 0.7 | 0.4 |
| (1-methylethenyl)benzene | 4.3 | 7.1 | 3.8 | 7.7 |
| 1-methyl-5(1-methylethenyl)-cyclohexene | 0.4 | 0.3 | 0.5 | 0.4 |
| 4-methyl-1-(1-methylethenyl)-cyclohexene | 0.5 | 0.2 | 0.1 | 0.1 |
| 1-methyl-4-(1-methylethenyl)-cyclohexene | 21.5 | 19.0 | 11.2 | 14.1 |
| 3,7,7-trimethoxylbicyclo[4.1.0]-hept-2-ene | 0.3 | 0.4 | 0.1 | 0.6 |
| 1-methyl-4-(1-methylethyl)-cyclohexene | 0.7 | 0.6 | 0.7 | 0.5 |

TABLE I(continued)

| Compound | Reactor: Percent of Total: I | 2 | 3 | 4 |
|---|---|---|---|---|
| 2,3,6-trimethyl-1,5-heptadiene | 0.3 | 0.3 | 0.4 | 0.5 |
| 1-ethyl-2-methylbenzene | 0.5 | 0.7 | 1.2 | 0.8 |
| 1-ethyl-3-methylbenzene | 0.1 | 0.1 | 0.4 | 0.1 |
| 2-ethyl-1,3-dimethylbenzene | 0.3 | 0.3 | 0.3 | 0.2 |
| 1-pentenylbenzene | 0.5 | 0.3 | 0.7 | 0.6 |
| 1,2,3-trimethylbenzene | 0.1 | 0.1 | 0.2 | 0.1 |
| | 99 % | 99 % | 99 % | 99 % |

It is thus apparent from Table I that several unexpected increases or decreases of various components are obtained as well as aromatic compounds which are not suggested by the prior art.

For example, the amount of toluene can range from about 6 to about 8.5 percent by weight, the amount of ethyl benzene can range from about 8 to about 25 percent, the amount of (1-methylethyl) benzene can range from 1 to 8 percent, the amount of styrene can range from about 30 to about 45 percent, and the amount of 1-methyl-4(1-methylethenyl)-cyclohexene will range from about 11 to about 18 percent.

EXAMPLE 2

Various amounts of scrap tire rubber as set forth in Table II was added to various reactors. The reactor size, heating temperatures, input rate of heat, and the like are the same as set forth above with regard to Example 1. Also, the pyrolysis was carried out in the same manner as set forth in Example 1 with the only difference being except that instead of a blend of polyisoprene and synthetic cis-1,4-polyisoprene, scrap rubber tire was utilized in the reactors. The results are set forth in Table II. As apparent from Table II, the amount of styrene produced by Reactor 4 was greatly reduced from that of the other reactors. Similarly, higher amounts of xylenes ethylmethyl benzenes, and the like were produced.

TABLE II

| | 1 | 2 | 3 | 4 |
|---|---|---|---|---|
| | Percent of Total | | | |
| Ethyl Benzene | 5.9 | 10.0 | 10.0 | 8.9 |
| Benzonitrile | 1.4 | 2.8 | 2.0 | 2.0 |
| (1-methylethy) benzene | 1.0 | 2.9 | 2.9 | 2.5 |
| Styrene | 10.1 | 5.1 | 6.3 | 2.5 |
| Xylenes | 1.6 | 2.0 | 4.3 | 8.2 |
| Propyl benzene | 1.2 | 1.6 | 1.4 | 1.5 |
| Ethylmethyl benzene | 2.0 | 3.7 | 4.2 | 4.9 |
| Trimethyl benzenes | 1.9 | 2.1 | 3.4 | 4.0 |
| 2-ethyl-1,3-dimethyl benzene | 0.9 | 1.5 | 1.3 | 4.8 |
| 1-methyl-4-(1-methylethenyl) cyclohexane | 15.9 | 15.0 | 7.7 | 5.5 |
| Benzene | 5.9 | 6.5 | 6.7 | 5.4 |
| Toluene | 11.1 | 14.3 | 13.5 | 12.4 |

As readily indicated by Table II, the pyrolysis of scrap rubbers yielded a significant amount of chemical compounds which have good octane ratings. Inasmuch as scrapped tires constitute a major waste product of the United States, the present invention has great potential in reducing the stock piling of such tires and turning them into a useful resource.

While in accordance with the patent statutes, a best mode and preferred embodiment has been described in detail, the invention is not limited thereto, the scope of the invention being limited by the attached claims.

WHAT IS CLAIMED IS:

1. A pyrolysis process for hydrocarbon material, comprising the steps of:

obtaining a pyrolytic reactor having an internal volume of at least 1 cubic feet;

charging an amount of hydrocarbon material thereto such that a pyrolyzate/char layer is formed during heating;

applying heat at a rate of from about 5,000 btu's per pound per hour or less to said hydrocarbon material; and

drawing off and collecting by-products from said reactor.

2. A process according to Claim 1, including applying heat at the rate of from about 5,000 to about 100 btu's per hour per pound of said hydrocarbon material.

3. A process according to Claim 2, wherein the temperature of said heat applied is from about 800°F to about 2,500°F, and the pressure in said reactor is from about 0.8 to about 80 psig.

4. A process according to Claim 3, including formation of said pyrolyzate/char to a thickness such that a temperature gradient is formed thereacross.

5. A process according to Claim 4, wherein the mass of said hydrocarbon material in said reactor is from about 100 to about 1,000 pounds for every approximately 64 cubic feet of volume.

6. A process according to Claim 5, wherein said internal reactor volume is from about 3 cubic feet to about 2,000 cubic feet.

7. A process according to Claim 6, wherein the heating rate is from about 2,000 to about 100 btu's per pound per hour, wherein said volume is from about 8 cubic feet to about 1,000 cubic feet, and wherein said mass is from about 200 to about 750 pounds per every 64 cubic feet of internal volume.

8. A process according to Claim 7, wherein said heating rate is from about 500 to about 100 btu's per pound per hour, wherein said internal volume is from about 8 to about 200 cubic feet, and wherein the amount of mass is from about 300 to about 500 pounds per every approximate 64 cubic feet of volume, and a temperature gradient of from about 300°F to about 1,500°F.

9. A process according to Claim 8, wherein said temperature of said heat is from about 1,500 to about 2,000°F.

10. A process according to Claim 9, wherein said pyrolysis process is continuous.

11. A process according to Claim 5, wherein said hydrocarbon materials are polymers.

12. A process according to Claim 7, wherein said hydrocarbon materials are elastomers.

13. A process according to Claim 3, including agitating said hydrocarbon, wherein the amount of hydrocarbon is from about 200 to about 3,500 pounds for every approximately 64 cubic feet of volume, and said reactor size is about 2 to about 2,000 $ft^3$.

14. A process according to Claim 5, including agitating said hydrocarbon, wherein the amount of hydrocarbon is from about 200 to about 3,500 pounds for every approximately 64 cubic feet of volume, and said reactor size is about 2 to about 2,000 $ft^3$.

15. A process according to Claim 8, including agitating said hydrocarbon, wherein the amount of hydrocarbon is from about 500 to about 2,000 pounds for every approximatgely 64 cubic feet of volume, and said reactor size is about 10 to 500 $ft^3$.

16. A fluid, comprising: the reaction product of a pyrolytic process of an approximate 50/50 blend by weight of polyisoprene and polystyrene in a reactor having an internal volume of at least 3 cubic feet, a char layer having a temperature gradient thereacross, at least a temperature of 800°F to about 2,500°F applied to said reactor at a rate of from about 100 to about 1,000 btu's per pound per hour and having the following weight analysis:

0162802

| Compound | Percent |
|---|---|
| Toluene | 6 to 8.5 |
| Ethyl benzene | 8 to 25 |
| (1-methylethyl) benzene | 1 to 8 |
| Styrene | 30 to 45 |
| 1-methyl-4-(1-methylethenyl)-cyclohexane | 11 to 18 |

17. A fluid, comprising the reaction product of scrap tire rubber in a reactor having an internal volume of at least 3 cubic feet, a char layer having a temperature gradient thereacross, a temperature of at least 800°F to about 2,500°F applied to said reactor at a rate of from about 100 to about 1,000 btu's per pound per hour and having the following weight analysis:

| Compound | Percent |
|---|---|
| Styrene | 1.0 to 4.5 |
| Xylenes | 5.0 to 12.0 |
| 2-ethyl-1,3-dimethyl benzene | 2.0 to 8.0 |
| 1-methyl-4-(1-methylethenyl)-cyclohexane | 2.0 to 7.0 |